# EUROPÄISCHE PATENTANMELDUNG

(11) **EP 3 767 771 A1**
(43) Veröffentlichungstag der Anmeldung: **20.01.2021**
(21) Anmeldenummer: 19186743.1
(22) Anmeldetag: 17.07.2019
(51) Int. Cl.: H02J 3/18

(54) **VERFAHREN ZUM ERZEUGEN EINER INDUKTIVEN BLINDLEISTUNG MITTELS EINER ELEKTRISCHEN VERBRAUCHERVORRICHTUNG, ELEKTRISCHE VERBRAUCHERVORRICHTUNG SOWIE ELEKTROLYSEVORRICHTUNG**

(71) Anmelder: Siemens Aktiengesellschaft, 80333 München (DE)
(72) Erfinder: Utz, Peter, 90762 Fürth (DE)

(57) **Zusammenfassung**

Die Erfindung betrifft ein Verfahren zum Erzeugen einer induktiven Blindleistung (Q_{IND}) für ein öffentliches Netz (14) mittels einer elektrischen Verbrauchervorrichtung (12), bei welchem in einem ersten Betriebsmodus der elektrischen Verbrauchervorrichtung (12) mittels einer Transformatoreinrichtung (18) ein Wechselstrom des öffentlichen Netzes (14) transformiert wird und der transformierte Wechselstrom für einen elektrischer Verbraucher (28) der elektrischen Verbrauchervorrichtung (12) bereitgestellt wird, wobei in einem zum ersten Betriebsmodus unterschiedlichen zweiten Betriebsmodus der elektrischen Verbrauchervorrichtung (12) mittels einer Schalteinrichtung (20) der elektrischen Verbrauchervorrichtung (12) die Transformatoreinrichtung (18) phasengesteuert kurzgeschlossen wird, wobei die Schalteinrichtung (20) derart phasengesteuert wird, dass in Abhängigkeit eines Phasenanschnittswinkels der Phasensteuerung der Schalteinrichtung (20) mittels des transformierten Wechselstroms die induktive Blindleistung (Q_{IND}) für das öffentliche Netz (14) mittels der Schalteinrichtung (20) erzeugt wird. Ferner betrifft die Erfindung eine elektrische Verbrauchervorrichtung 12 sowie eine Elektrolysevorrichtung (10).

## Beschreibung

Die Erfindung betrifft ein Verfahren zum Erzeugen einer induktiven Blindleistung für ein öffentliches Netz mittels einer elektrischen Verbrauchervorrichtung, bei welchem in einem ersten Betriebsmodus der elektrischen Verbrauchervorrichtung mittels einer Transformatoreinrichtung ein Wechselstrom des öffentliches Netzes transformiert wird und der transformierte Wechselstrom für einen elektrischen Verbraucher der elektrischen Verbrauchervorrichtung bereitgestellt wird. Ferner betrifft die Erfindung eine elektrische Verbrauchervorrichtung sowie eine Elektrolysevorrichtung.

Aus dem Stand der Technik ist bekannt, dass beispielsweise bei Elektrolysevorrichtungen, welche auch als Elektrolysespeicherkraftwerke bezeichnet werden können, Elektrolysen hoher Leistung und hoher Spannung mit netzgeführten B6-Brücken gespeist werden. Um eine Regelbarkeit der Elektrolysen zu realisieren, sind im vorgeschalteten Gleichrichter normalerweise ein Stufenschalter zur Grobregelung und ein Thyristorschalter zur Feinregelung verbaut. Diese Regelung erlaubt ein genaues Anfahren des Arbeitspunktes, da alle Elektrolysezellen in Reihe geschaltet sind. Die Gleichrichter sind insbesondere netzgeführt und benötigen zur Feinsteuerung induktive Steuerblindleistung, welche im Verhältnis zur Wirkleistung sehr gering ist. Bei einem normalen Aufbau von Elektrolysevorrichtungen kann also fast nur Wirkleistung entnommen werden, in geringem Maße induktive Blindleistung zur Verfügung gestellt werden. Beides ist jedoch nur realisiert, wenn die Elektrolysevorrichtung in Betrieb ist und Elektrolyse betreibt.

Aufgabe der vorliegenden Erfindung ist es, ein Verfahren, eine elektrische Verbrauchervorrichtung sowie eine Elektrolysevorrichtung zu schaffen, mittels welchen zusätzlich induktive Blindleistung für ein öffentliches Netz erzeugt werden kann.

Diese Aufgabe wird durch ein Verfahren, eine elektrische Verbrauchervorrichtung sowie eine Elektrolysevorrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Erzeugen einer induktiven Blindleistung für ein öffentliches Netz mittels einer elektrischen Verbrauchervorrichtung, bei welchem in einem ersten Betriebsmodus der elektrischen Verbrauchervorrichtung mittels einer Transformatoreinrichtung ein Wechselstrom des öffentlichen Netzes transformiert wird und der transformierte Wechselstrom für einen elektrischen Verbraucher der elektrischen Verbrauchervorrichtung bereitgestellt wird.

Es ist vorgesehen, dass in einem zum ersten Betriebsmodus unterschiedlichen zweiten Betriebsmodus der elektrischen Verbrauchervorrichtung mittels einer Schalteinrichtung der elektrischen Verbrauchervorrichtung die Transformatoreinrichtung phasengesteuert kurzgeschlossen wird, wobei die Schalteinrichtung derart phasengesteuert wird, dass in Abhängigkeit eines Phasenanschnittswinkels der Phasensteuerung der Schalteinrichtung die induktive Blindleistung mittels des transformierten Wechselstroms für das öffentliche Netz mittels der Schalteinrichtung erzeugt wird.

Dadurch ist es ermöglicht, dass im zweiten Betriebsmodus induktive Blindleistung in das öffentliche Netz zurückgespeist werden kann. Insbesondere wird somit der Wechselstrom des öffentlichen Netzes sowohl im ersten Betriebsmodus als auch im zweiten Betriebsmodus transformiert. Somit kann eine zusätzliche Netzdienstleistung für das öffentliche Netz bereitgestellt werden. Insbesondere kann dadurch eine Erweiterung der Netzdienstleistung eines bereits bestehenden Systems, insbesondere der elektrischen Verbrauchervorrichtung, realisiert werden, welche besonders bei schwachen Mittelspannungsnetzen benötigt wird. Die Kosten der Schalteinrichtung sind insbesondere gering im Gegensatz zu beispielsweise thyristorgeregelten Drosseln beziehungsweise hart ans Netz geschalteten Induktivitäten.

Mit anderen Worten ist vorgesehen, dass durch einen Kurzschluss auf einer Sekundärseite der Transformatoreinrichtung, wobei die Primärseite dem öffentlichen Netz zugeordnet ist, und durch phasengesteuertes Takten dieses Kurschlusses die induktive Blindleistung innerhalb der Schalteinrichtung beziehungsweise innerhalb der Transformatoreinrichtung erzeugt wird und diese wiederum in das öffentliche Netz zurückgespeist werden kann.

Gemäß einer vorteilhaften Ausgestaltungsform weist die Schalteinrichtung eine Gleichrichterschaltung und einen Trennschalter auf, wobei zum Kurzschließen der Transformatoreinrichtung der Trennschalter geschlossen wird und der Phasenanschnittswinkel mittels der Gleichrichterschaltung durch getaktetes Ansteuern der Gleichrichterschaltung gesteuert wird. Insbesondere ist der Trennschalter auf einer Gleichstromseite der Gleichrichterschaltung angeordnet. Insbesondere wird dann der Trennschalter zum Erzeugen der induktiven Blindleistung, also im zweiten Betriebsmodus, dauerhaft kurzgeschlossen, wobei die Phasensteuerung über den Phasenanschnittswinkel durch die Gleichrichterschaltung entsprechend getaktet wird. Dadurch ist es ermöglicht, dass beispielsweise die elektrische Verbrauchervorrichtung als ein bereits bestehendes Speicherkraftwerk, insbesondere eine Elektrolysevorrichtung, ausgebildet sein kann. Die Gleichrichterschaltung ist hierbei bereits vorhanden, um den Wechselstrom aus dem Netz für die Elektrolysevorrichtung gleichzurichten. Es ist dann lediglich notwendig, den Trennschalter zusätzlich einzubauen. Mittels des Trennschalters wird dann insbesondere bei geöffneten Schützen, welche die Elektrolysevorrichtung auf der Gleichstromseite vom öffentlichen Netzt trennen können, der Elektrolysevorrichtung die Gleichstromseite kurzgeschlossen, und über die entsprechende Taktung der Gleichrichterschaltung wird die induktive Blindleistung erzeugt. Dadurch kann auf einfache Art und Weise in einem bereits bestehenden System zusätzlich die induktive Blindleistung für das öffentliche Netz erzeugt werden.

Ferner hat es sich als vorteilhaft erwiesen, wenn mittels einer Sechspuls-Brückenschaltung als Gleichrichterschaltung der transformierte Wechselstrom phasengesteuert wird. Die Sechspuls-Brückenschaltung wird auch als B6C-Schaltung bezeichnet. Bei der B6C-Schaltung handelt es sich um eine gesteuerte Drehstrombrücke, die vor allem bei großen Lasten beispielsweise bei über 5 MW eingesetzt wird und bei der es sich um eine vollgesteuerte Drehstrombrücke handelt. Insbesondere kann somit die Elektrolysevorrichtung als Speicherkraftwerk genutzt werden. Insbesondere wird diese mit sechs Thyristoren realisiert, die über eine Anschnittssteuerung eine Spannungsregelung ermöglichen, beispielsweise zur stufenlosen Steuerung von Elektrolysezellen der Elektrolyseeinrichtung. Insbesondere ist die Sechspuls-Brückenschaltung bei einer Elektrolysevorrichtung bereits vorhanden. Des Weiteren kann dadurch die Phasenanschnittssteuerung einfach umgesetzt werden. Dadurch kann einfach und dennoch zuverlässig die induktive Blindleistung im zweiten Betriebsmodus erzeugt werden.

In einer weiteren vorteilhaften Ausgestaltungsform wird mittels der Gleichrichterschaltung die induktive Blindleistung derart erzeugt, dass diese der installierten Scheinleistung der Transformatoreinrichtung entspricht. Insbesondere kann dadurch induktive Blindleistung zur Verfügung gestellt werden, welche genauso hoch sein kann, wie die installierte Schalenleistung der Trafoeinrichtung. Insbesondere wird dies durch den nach der Gleichrichterschaltung zusätzlich eingebauten Trennschalter realisiert. Insbesondere kann dadurch eine zusätzliche Netzdienstleistung erbracht werden, falls das öffentliche Netz dies anfordert.

Weiterhin vorteilhaft ist, wenn zum Erzeugen der induktiven Blindleistung die Gleichrichterschaltung mit einem Nennstrom der Gleichrichterschaltung betrieben wird. Insbesondere wird somit die Gleichstromseite der Gleichrichterschaltung kurzgeschlossen, wobei die Gleichrichterschaltung dann auf Nennstrom geregelt werden kann. Insbesondere kann dadurch das PQ-Diagramm der elektrischen Verbrauchervorrichtung um einen Arbeitsbereich erweitert werden, welcher hauptsächlich induktive Blindleistung für das öffentliche Netz bereitstellt.

Ferner hat es sich als vorteilhaft erwiesen, wenn zusätzlich mittels eines Stufenschalters der Transformatoreinrichtung die induktive Blindleistung gesteuert wird. Insbesondere kann somit die Regelung über den Stufenschalter der Transformatoreinrichtung zusätzlich realisiert werden. Insbesondere kann dadurch von einer Nennleistung des Trafos bis zu einer untersten Stufenleistung der Transformatoreinrichtung die induktive Blindleistung gesteuert werden. Somit kann zusätzlich die induktive Blindleistung für das öffentliche Netz geregelt werden.

In einer weiteren vorteilhaften Ausgestaltungsform wird die Schalteinrichtung mit einen Phasenanschnittswinkel von zumindest größer 75°, insbesondere größer 80°, insbesondere größer 85°, insbesondere größer 90°, insbesondere bevorzugt größer 90°, gesteuert. Dadurch ist es ermöglicht, dass im Wesentlichen reine induktive Blindleistung in das öffentliche Netz zurückgespeist wird. Dadurch kann die zusätzliche Netzdienstleistung erbracht werden, falls der Netzbetreiber dies anfordert. Insbesondere durch den Phasenanschnitt von größer 90° wird lediglich induktive Blindleistung erzeugt. Dadurch wird keine Wirkleistung ins Netz zurückgespeist, sondern lediglich induktive Blindleistung.

Ein weiterer Aspekt der Erfindung betrifft eine elektrische Verbrauchervorrichtung zum Erzeugen einer induktiven Blindleistung mit zumindest einer Transformatoreinrichtung und mit einer Schalteinrichtung, wobei die elektrische Verbrauchervorrichtung zum Durchführen eines Verfahrens nach dem vorhergehenden Aspekt ausgebildet ist.

Ein nochmals weiterer Aspekt der Erfindung betrifft eine Elektrolysevorrichtung zum Durchführen einer Elektrolyse in einem ersten Betriebsmodus und zum Erzeugen einer induktiven Blindleistung für ein öffentliches Netz in einem zweiten Betriebsmodus, mit zumindest einer Elektrolyseeinrichtung und mit einer elektrischen Verbrauchervorrichtung nach dem vorhergehenden Aspekt.

Gemäß einer vorteilhaften Ausgestaltungsform der Elektrolysevorrichtung weist die Elektrolysevorrichtung einen Stufenschalter für eine Grobregelung der Elektrolyse und einen Thyristorschalter für eine Feinregelung der Elektrolyse im ersten Betriebsmodus auf.

Ein unabhängiger Aspekt der Erfindung betrifft ein Verfahren zum Erzeugen einer induktiven Blindleistung für ein öffentliches Netz mittels einer Elektrolysevorrichtung, bei welchem in einem ersten Betriebsmodus der Elektrolysevorrichtung mittels einer Transformatoreinrichtung der Elektrolysevorrichtung auf einer Wechselstromseite der Elektrolysevorrichtung ein Wechselstrom des öffentlichen Netzes transformiert wird, und der transformierte Wechselstrom an einer Eingangsseite einer Gleichrichterschaltung der Elektrolysevorrichtung bereitgestellt wird und mittels der Gleichrichterschaltung der transformierte Wechselstrom in einen Gleichstrom umgewandelt wird und der Gleichstrom auf einer Ausgangsseite der Gleichrichterschaltung von einer Elektrolysevorrichtung für eine Elektrolyse auf einer Gleichstromseite der Elektrolysevorrichtung bereitgestellt wird. Es ist vorgesehen, dass in einem zum ersten Betriebsmodus unterschiedlichen zweiten Betriebsmodus der Elektrolysevorrichtung ein Trennschalter der Elektrolysevorrichtung auf der Ausgangsseite geschlossen wird und die Ausgangsseite mittels des Trennschalters kurzgeschlossen wird und die induktive Blindleistung für das öffentliche Netz mittels der Gleichrichterschaltung und mittels des transformierten Wechselstroms erzeugt wird.

Vorteilhafte Ausgestaltungsformen des Verfahrens sind als vorteilhafte Ausgestaltungsformen der elektrischen Verbrauchervorrichtung sowie der Elektrolysevorrichtung anzusehen. Die elektrische Verbrauchervorrichtung und die Elektrolysevorrichtung weisen dazu gegenständliche Merkmale auf, welche eine Durchführung des Verfahrens oder eine vorteilhafte Ausgestaltungsform davon ermöglichen.

Weitere Merkmale und Vorteile sind der folgenden Beschreibung anhand der beigefügten Figuren zu entnehmen. In den Figuren bezeichnen gleiche Bezugszeichen gleiche Merkmale und Funktionen. Die Ausführungsbeispiele dienen lediglich der Erläuterung der Erfindung und sollen diese nicht beschränken.

Dabei zeigen:
- FIG 1: eine schematische Ansicht einer Ausführungsform einer Elektrolysevorrichtung mit einer Ausführungsform einer elektrischen Verbrauchervorrichtung; und
- FIG 2: ein schematisches Blindleistungs-Wirkleistungs-Diagramm einer Ausführungsform der Elektrolysevorrichtung.

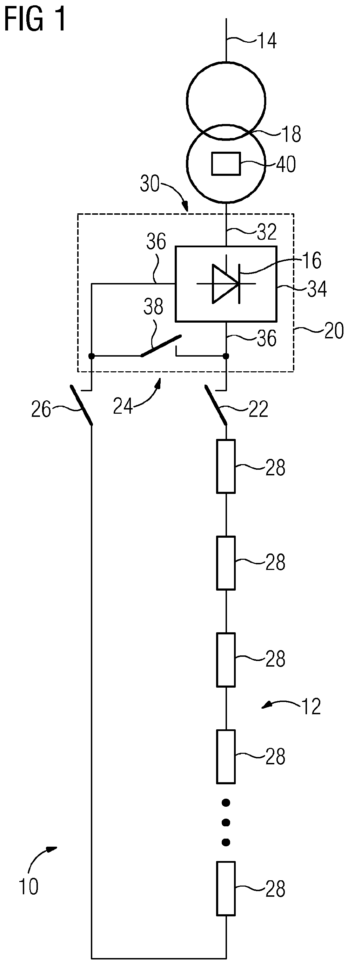

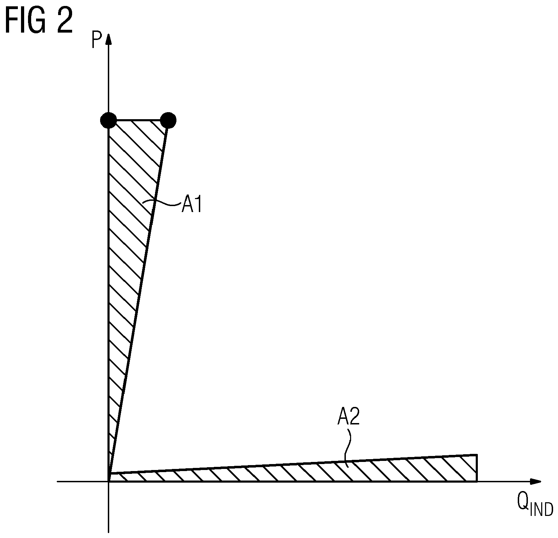

FIG 1 zeigt in einer schematischen Ansicht eine Ausführungsform einer Elektrolysevorrichtung 10 mit einer Ausführungsform einer elektrischen Verbrauchervorrichtung 12. Die elektrische Verbrauchervorrichtung 12 ist in diesem Ausführungsbeispiel insbesondere als Elektrolyseeinrichtung. Die Elektrolysevorrichtung 10 ist zum Durchführen einer Elektrolyse in einem ersten Betriebsmodus ausgebildet und zum Erzeugen einer induktiven Blindleistung Q_{IND} (FIG 2) für ein öffentliches Netz 14 in einem zweiten Betriebsmodus ausgebildet und weist zumindest einen Stufenschalter für eine Grobregelung der Elektrolyse auf und einen Thyristorschalter 16 für eine Feinregelung der Elektrolyse im ersten Betriebsmodus auf. Ferner weist die elektrische Verbrauchervorrichtung 12 zumindest eine Transformatoreinrichtung 18 und eine Schalteinrichtung 20 auf. Ferner weist die Elektrolysevorrichtung 10 ein erstes Schaltelement 22 zum Trennen einer Gleichstromseite 24 der Elektrolysevorrichtung 12 sowie ein zweites Schaltelement 26 zum Trennen der Gleichstromseite 24 vom öffentlichen Netz 14 auf.

Durch das öffentliche Netz 14 wird insbesondere ein Wechselstrom bereitgestellt. Insbesondere ist in der vorliegenden FIG 1 lediglich eine Phase des Wechselstroms gezeigt. Es kann ergänzend auch das Verfahren mit drei Wechselstromphasen aus dem öffentlichen Netz 14 die Elektrolysevorrichtung 10 betrieben werden.

Beim Verfahren zum Erzeugen der induktiven Blindleistung Q_{IND} für das öffentliche Netz 14 mittels der elektrischen Verbrauchervorrichtung 12 wird in einem ersten Betriebsmodus der elektrischen Verbrauchervorrichtung 12 mittels der Transformatoreinrichtung 18 der Wechselstrom des öffentlichen Netzes 14 transformiert, und der transformierte Wechselstrom für einen elektrischen Verbraucher 28 der elektrischen Verbrauchervorrichtung 12 bereitgestellt.

Es ist vorgesehen, dass in einem zum ersten Betriebsmodus unterschiedlichen zweiten Betriebsmodus der elektrischen Verbrauchervorrichtung 12 mittels der Schalteinrichtung 20 der elektrischen Verbrauchervorrichtung 12 die Transformatoreinrichtung 18 phasengesteuert kurzgeschlossen wird, wobei die Schalteinrichtung 20 derart phasengesteuert wird, dass in Abhängigkeit eines Phasenanschnittswinkels der Phasensteuerung der Schalteinrichtung 20 die induktive Blindleistung Q_{IND} mittels des transformierten Wechselstroms für das öffentliche Netz 14 mittels der Schalteinrichtung 20 erzeugt wird.

Im vorliegenden Ausführungsbeispiel ist insbesondere ein Verfahren zum Erzeugen der induktiven Blindleistung Q_{IND} für das öffentliche Netz 14 mittels der Elektrolysevorrichtung 10 gezeigt, bei welchem in einem ersten Betriebsmodus der Elektrolysevorrichtung 10 mittels der Transformatoreinrichtung 18 der Elektrolysevorrichtung 10 auf einer Wechselstromseite 30 der Elektrolysevorrichtung 10 Wechselstrom des öffentlichen Netzes 14 transformiert wird und der transformierte Wechselstrom einer Eingangsseite 32 einer Gleichrichterschaltung 34 der Elektrolysevorrichtung 10 bereitgestellt wird und mittels der Gleichrichterschaltung 34 der transformierte Wechselstrom in einen Gleichstrom umgewandelt wird und der Gleichstrom auf einer Ausgangsseite 36 der Gleichrichterschaltung 34 für die Elektrolyseeinrichtung für eine Elektrolyse auf der Gleichstromseite 24 der Elektrolysevorrichtung 10 bereitgestellt wird. Hierbei ist insbesondere vorgesehen, dass in einem zum ersten Betriebsmodus unterschiedlichen zweiten Betriebsmodus der Elektrolysevorrichtung 10 ein Trennschalter 38 der Elektrolysevorrichtung 10 auf der Ausgangsseite 36 geschlossen wird und die Ausgangsseite 36 mittels des Trennschalters 38 kurzgeschlossen wird und die induktive Blindleistung Q_{IND} für das öffentliche Netz 14 mittels der Gleichrichterschaltung 34 und dem transformierten Wechselstrom erzeugt wird.

Mit anderen Worten zeigt die FIG 1 insbesondere, dass die Schalteinrichtung 20 die Gleichrichterschaltung 34 und den Trennschalter 38 aufweisen kann, wobei zum Kurzschließen der Transformatoreinrichtung 18 der Trennschalter 38 geschlossen wird und der Phasenanschnittswinkel mittels der Gleichrichterschaltung 34 durch getaktetes Ansteuern der Gleichrichterschaltung 34 gesteuert wird.

Insbesondere kann hierbei vorgesehen sein, dass die Gleichrichterschaltung 34 als Sechspuls-Brückenschaltung und insbesondere als B6C-Schaltung bereitgestellt wird. Somit ist vorgesehen, dass mittels der Sechspuls-Brückenschaltung als Gleichrichterschaltung 34 der transformierte Wechselstrom phasengesteuert wird.

Ferner ist insbesondere vorgesehen, dass mittels der Gleichrichterschaltung 34 die induktive Blindleistung Q_{IND} derart erzeugt wird, dass diese der installierten Scheinleistung der Transformatoreinrichtung 18 entspricht. Zum Erzeugen der induktiven Blindleistung Q_{IND} wird die Gleichrichterschaltung 34 insbesondere mit einem Nennstrom der Gleichrichterschaltung 34 betrieben.

Ferner kann vorgesehen sein, dass zusätzlich mittels eines Stufenschalters der Transformatoreinrichtung 18 die induktive Blindleistung Q_{IND} gesteuert wird.

Insbesondere kann vorgesehen sein, dass die Schalteinrichtung 20 mit einem Phasenanschnittswinkel von zumindest größer 75°, insbesondere größer 80°, insbesondere größer 85°, insbesondere größer 90° gesteuert wird.

Insbesondere macht sich die Erfindung somit zunutze, dass bei Elektrolysen hoher Leistung und hoher Spannung die Elektrolysevorrichtung 10 den netzgeführten Gleichrichter, mit anderen Worten die Gleichrichterschaltung 34, aufweist. Um eine Regelbarkeit der Elektrolysen zu realisieren, sind in der vorgeschalteten Gleichrichterschaltung 34 der Stufenschalter zur Grobregelung und der Thyristorschalter zur Feinregelung verbaut. Diese Regelung erlaubt ein genaues Anfahren des Arbeitspunktes, da alle Elektrolysezellen, welche im vorliegenden Ausführungsbeispiel den elektrischen Verbrauchern 28 entsprechen, in Reihe geschaltet sind. Da die Gleichrichterschaltung 34 netzgeführt ist, benötigt sie zur Feinsteuerung induktive Steuerblindleistung, welche im Verhältnis zur Wirkleistung sehr gering ist. Bei dem normalen Aufbau von Elektrolysen kann Leistung P (FIG 2) entnommen werden und in geringem Maße induktive Blindleistung Q_{IND} zur Verfügung gestellt werden. Beides funktioniert aber nur, wenn die Elektrolyse in Betrieb ist. Somit sind zusätzliche Netzdienstleistungen im ersten Betriebsmodus nicht zu erbringen.

Um nun für das öffentliche Netz 14 eine zusätzliche Netzdienstleistung auch bei nicht stattfindender Elektrolyse bereitzustellen, wird bei geöffneten Schaltelementen 22, 26 und dem folgenden Ausführungsbeispiel bei geschlossenem Trennschalter 38 die induktive Blindleistung Q_{IND} zur Verfügung gestellt, welche insbesondere genauso hoch sein kann wie die installierte Scheinleistung der Transformatoreinrichtung 18. So wird nach der Gleichrichterschaltung 34 der Trennschalter 38 verbaut. Dieser schließt die Gleichstromseite 24 kurz, die Gleichrichterschaltung 34 kann damit geregelt auf Nennstrom gefahren werden. Da dies allerdings bei einem Phasenanschnittswinkel von ungefähr 90° geschieht, wird nur reine Blindleistung Q_{IND} in das öffentliche Netz 14 zurückgespeist. Somit kann mit diesem Umbau eine zusätzliche Netzdienstleistung erbracht werden, falls der Netzbetreiber dies anfordert.

Somit kann durch einen einfachen Einbau des Trennschalters 38 in einem bereits bestehenden System der Elektrolysevorrichtung 10, welches besonders bei schwachen Mittelspannungen eingesetzt werden kann, die induktive Blindleistung Q_{IND} bereitgestellt werden. Die Kosten des Trennschalters 38 sind dabei verschwindend gering im Gegensatz zu beispielsweise gemäß dem Stand der Technik eingesetzten thyristorgeregelten Drosseln beziehungsweise hart ans Netz geschalteten Induktivitäten. Somit wird der Trennschalter 38 vorgeschlagen, welcher sich bei Bedarf, also im zweiten Betriebsmodus, schließt, während sich die beiden bestehenden Schaltelemente 22, 26 zur Elektrolyse öffnen.

FIG 2 zeigt in einer schematischen Ansicht ein Blindleistungs-Wirkleistungs-Diagramm. Insbesondere ist auf der Abszisse die induktive Blindleistung Q_{IND} aufgetragen sowie auf der Ordinate die Wirkleistung P. Bei der Elektrolyse weist die Elektrolysevorrichtung 10 insbesondere einen ersten Arbeitsbereich A1 auf. Mit anderen Worten wird bei der Elektrolyse nahezu nur Wirkleistung P erzeugt und geringe induktive Blindleistung Q_{IND}. Insbesondere zeigt somit der Arbeitsbereich A1 den ersten Betriebsmodus der Elektrolysevorrichtung 10. Durch das Schließen des Trennschalters 38, mit anderen Worten durch das Kurzschließen der Gleichstromseite 24, wird die Elektrolysevorrichtung 10 um einen zweiten Arbeitsbereich A2 erweitert. Im zweiten Arbeitsbereich A2 wird nahezu nur induktive Blindleistung Q_{IND} erzeugt und nur geringe Wirkleistung P.

Insgesamt zeigt die Erfindung eine erweiterte Bereitstellung von induktiver Blindleistung Q_{IND} als Netzsystemleistung einer Elektrolyse.

### Bezugszeichenliste

- 10: Elektrolysevorrichtung
- 12: Elektrische Verbrauchervorrichtung
- 14: öffentliches Netz
- 16: Thyristorschalter
- 18: Transformatoreinrichtung
- 20: Schalteinrichtung
- 22: erstes Schaltelement
- 24: Gleichstromseite
- 26: zweites Schaltelement
- 28: elektrischer Verbraucher
- 30: Wechselstromseite
- 32: Eingangsseite
- 34: Gleichrichterschaltung
- 36: Ausgangsseite
- 38: Trennschalter
- A1: erster Arbeitsbereich
- A2: zweiter Arbeitsbereich
- Q_{ind}: induktive Blindleistung
- P: Wirkleistung

## Patentansprüche

1. Verfahren zum Erzeugen einer induktiven Blindleistung (Q_{IND}) für ein öffentliches Netz (14) mittels einer elektrischen Verbrauchervorrichtung (12), bei welchem in einem ersten Betriebsmodus der elektrischen Verbrauchervorrichtung (12) mittels einer Transformatoreinrichtung (18) ein Wechselstrom des öffentlichen Netzes (14) transformiert wird und der transformierte Wechselstrom für einen elektrischer Verbraucher (28) der elektrischen Verbrauchervorrichtung (12) bereitgestellt wird, **dadurch gekennzeichnet, dass** in einem zum ersten Betriebsmodus unterschiedlichen zweiten Betriebsmodus der elektrischen Verbrauchervorrichtung (12) mittels einer Schalteinrichtung (20) der elektrischen Verbrauchervorrichtung (12) die Transformatoreinrichtung (18) phasengesteuert kurzgeschlossen wird, wobei die Schalteinrichtung (20) derart phasengesteuert wird, dass in Abhängigkeit eines Phasenanschnittswinkels der Phasensteuerung der Schalteinrichtung (20) mittels des transformierten Wechselstroms die induktive Blindleistung (Q_{IND}) für das öffentliche Netz (14) mittels der Schalteinrichtung (20) erzeugt wird.

2. Verfahren nach Anspruch 1, **dadurch gekennzeichnet, dass** die Schalteinrichtung (20) eine Gleichrichterschaltung (34) und einen Trennschalter (38) aufweist, wobei zum Kurzschließen der Transformatoreinrichtung (18) der Trennschalter (38) geschlossen wird und der Phasenanschnittswinkel mittels der Gleichrichterschaltung (34) durch getaktetes Ansteuern der Gleichrichterschaltung (34) gesteuert wird.

3. Verfahren nach Anspruch 2, **dadurch gekennzeichnet, dass** mittels einer Sechspuls-Brückenschaltung als Gleichrichterschaltung (34) der transformierte Wechselstrom phasengesteuert wird.

4. Verfahren nach einem der Ansprüche 2 bis 3, **dadurch gekennzeichnet, dass** mittels der Gleichrichterschaltung (34) die induktive Blindleistung (Q_{IND}) derart erzeugt wird, dass diese der installierten Scheinleistung der Transformatoreinrichtung (18) entspricht.

5. Verfahren nach einem der Ansprüche 2 bis 4, **dadurch gekennzeichnet, dass** zum Erzeugen der induktiven Blindleistung (Q_{IND}) die Gleichrichterschaltung (20) mit einem Nennstrom der Gleichrichterschaltung (20) betrieben wird.

6. Verfahren nach einem der vorhergehenden Ansprüche, **dadurch gekennzeichnet, dass** zusätzlich mittels eines Stufenschalters (40) der Transformatoreinrichtung (18) die induktive Blindleistung (Q_{IND}) gesteuert wird.

7. Verfahren nach einem der vorhergehenden Ansprüche, **dadurch gekennzeichnet, dass** die Schalteinrichtung (20) mit einem Phasenanschnittswinkel von zumindest größer 75°, insbesondere größer 80°, insbesondere größer 85°, insbesondere größer 90°, gesteuert wird.

8. Elektrische Verbrauchervorrichtung (12) zum Erzeugen einer induktiven Blindleistung (Q_{IND}) mit zumindest einer Transformatoreinrichtung (18) und mit einer Schalteinrichtung (20), wobei die elektrische Verbrauchervorrichtung (12) zum Durchführen eines Verfahrens nach einem der Ansprüche 1 bis 7 ausgebildet ist.

9. Elektrolysevorrichtung (10) zum Durchführen einer Elektrolyse in einem ersten Betriebsmodus und zum Erzeugen einer induktiven Blindleistung (Q_{IND}) für ein öffentliches Netz (14) in einem zweiten Betriebsmodus, mit zumindest einer Elektrolyseeinrichtung als elektrische Verbrauchervorrichtung (12) nach Anspruch 8.

10. Elektrolysevorrichtung (10) nach Anspruch 9, **dadurch gekennzeichnet, dass** die Elektrolysevorrichtung (10) einen Stufenschalter für eine Grobregelung der Elektrolyse und einen Thyristorschalter (16) für eine Feinregelung der Elektrolyse im ersten Betriebsmodus aufweist.
